# EUROPÄISCHE PATENTSCHRIFT

(11) **EP 3 045 376 B1**
(45) Veröffentlichungstag und Bekanntmachung des Hinweises auf die Patenterteilung: **16.08.2017**
(21) Anmeldenummer: 15199581.8
(22) Anmeldetag: 11.12.2015
(51) Int. Cl.: B62D 1/04, B62D 1/06

(54) **LENKER EINES EINEN FAHRERARBEITSPLATZ AUFWEISENDEN FLURFÖRDERZEUGS**
STEERING WHEEL OF AN INDUSTRIAL TRUCK COMPRISING A DRIVER WORKPLACE
VOLANT POUR UN CHARIOT DE MANUTENTION DOTÉ D'UN POSTE DE TRAVAIL DU CONDUCTEUR

(30) Priorität: 19.01.2015 DE 102015000518; 04.09.2015 DE 102015114795
(43) Veröffentlichungstag der Anmeldung: 20.07.2016
(73) Patentinhaber: OM Carrelli Elevatori S.p.A., 20020 Lainate (MI) (IT)
(72) Erfinder: Mariotti, Fabio, 42016 Guastalla (IT); Castagnoli, Fabrizio, 46029 Suzzara - Mantova (IT); Kretschmer, Steffen, 63868 Grosswallstadt (DE); Balugani, Giorgio, 40054 Budrio - Bologna (IT)
(74) Vertreter: Patentship Patentanwaltsgesellschaft mbH

(56) Entgegenhaltungen:
- DE-A1- 10 144 079
- US-B1- 6 655 703

## Beschreibung

Die Erfindung betrifft einen Lenker eines einen Fahrerarbeitsplatz, insbesondere Fahrerstand, aufweisenden Flurförderzeugs, wobei der Lenker als Lenkrad ausgebildet ist, das einen Lenkkranz aufweist, und um eine Drehachse drehbar angeordnet ist, wobei der Lenkkranz einen linken Griffabschnitt, einen rechten Griffabschnitt und einen zwischen den beiden Griffabschnitten angeordneten Mittelgriffabschnitt aufweist, wobei ein linkes Bedienelement zur Steuerung des Fahrantriebs am Übergang des linken Griffabschnitts zum Mittelgriffabschnitt und ein rechtes Bedienelement zur Steuerung des Fahrantriebs am Übergang des rechten Griffabschnitts zum Mittelgriffabschnitt angeordnet ist.

Bei Flurförderzeugen ist es bekannt, einen Lenkantrieb mittels eines als Lenkrades ausgebildeten Lenkers zu steuern. Bei Flurförderzeugen, die von einer in einem als Fahrerstand ausgebildete Fahrerarbeitsplatz befindlichen Bedienperson im Stehen bedient werden, ist es bekannt, an dem im Wesentlichen ringförmigen Lenkkranz des Lenkrades mindestens ein ringförmiges, drehbares Bedienelement zur Steuerung des Fahrantriebs des Flurförderzeugs anzuordnen. Das ringförmige Bedienelement kann von einer Bedienperson, die den Lenkkranz mit einer Hand umgreift, mittels des Daumens der den Lenkkranz des Lenkrades umgreifenden Hand betätigt werden, so dass von der Bedienperson mit der den Lenkkranz umgreifenden Hand gleichzeitig durch Drehen des Lenkrades gelenkt und durch Betätigen des ringförmigen Bedienelements der Fahrantrieb betätigt werden kann.

Ein gattungsgemäßer als Lenkrad ausgebildeter Lenker für ein als Kommissionierer ausgebildetes Flurförderzeug ist aus der EP 1 155 939 B1 bekannt.

Das Lenkrad der EP 1 155 939 B1 besteht aus einer von einem ersten Abschnitt gebildeten Lenkerkonsole, die um die Drehachse drehbar angeordnet ist. An dem ersten Abschnitt ist an einer rechten Seite an einem Ansatz ein rechter Griffabschnitt und an einer linken Seite an einem Ansatz ein linker Griffabschnitt angeformt. Die Griffabschnitte weisen freie Enden auf, die aufeinader zu laufen. Um einen Lenkkranz zu bilden, ist ein als dritter Griffabschnitt ausgebildeter Mittelgriffabschnitt vorgesehen, der mittels eines speichenförmigen Abschnitts, der sich vom Fahrerstand forterstreckt, an dem die Lenkerkonsole bildenden ersten Abschnitt angeformt ist. Der Mittelgriffabschnitt erstreckt sich mit seinen beiden Enden zu den Enden des linken Griffabschnitts und des rechten Griffabschnitts. Die Enden des Mittelgriffabschnitts, des linken Griffabschnitts und des rechten Griffabschnitts sind voneinander beabstandet. An dem freien Ende des linken Griffabschnitts ist ein linkes Bedienelement angeordnet, mit dem der Fahrantrieb des Flurförderzeugs gesteuert werden kann. Entsprechend ist an dem freien Ende des rechten Griffabschnitts ein rechtes Bedienelement angeordnet, mit dem der Fahrantrieb des Flurförderzeugs gesteuert werden kann.

Ein gattungsgemäßes Lenkrad, dessen Lenkkranz aus einem linken Griffabschnitt, einem rechten Griffabschnitt und einem zwischen den beiden Griffabschnitten angeordneten Mittelgriffabschnitt besteht, ermöglicht mehrere Griff- und Bedienpositionen. Für die Vorwärtsfahrt und/oder die Rückwärtsfahrt des Flurförderzeugs kann die Bedienperson in einer normalen Griffposition mit der linken Hand den linken Griffabschnitt umgreifen und mit dem Daumen der linken Hand das linke Bedienelement des Fahrantriebs betätigen und/oder mit der rechten Hand den rechten Griffabschnitt umgreifen und mit dem Daumen der rechten Hand das rechte Bedienelement des Fahrantriebs betätigen. Für die Rückwärtsfahrt ist mit einem derartigen Lenkrad eine verbesserte Ergonomie erzielbar, wenn in einer alternativen Griffposition die Bedienperson mit der linken Hand den Mittelgriffabschnitt umgreift und mit dem Daumen der linken Hand das rechte Bedienelement des Fahrantriebs betätigt oder mit der rechten Hand den Mittelgriffabschnitt umgreift und mit dem Daumen der rechten Hand das linke Bedienelement des Fahrantriebs betätigt.

Bei der EP 1 155 939 B1 ist nachteilig, dass der speichenförmige Abschnitt, der an den ersten Abschnitt angeformt ist und in den Mittelgriffabschnitt des Lenkkranzes übergeht, in der alternativen Griffposition, in der die Bedienperson mit der linken Hand den Mittelgriffabschnitt von Außen umgreift und mit dem Daumen der linken Hand das rechte Bedienelement des Fahrantriebs betätigt oder mit der rechten Hand den Mittelgriffabschnitt von Außen umgreift und mit dem Daumen der rechten Hand das linke Bedienelement des Fahrantriebs betätigt, zu einer ungünstigen Ergonomie führt, da der speichenförmige Abschnitt das Umgreifen des Mittelgriffabschnitts mit der linken bzw. rechten Hand behindert.

Der vorliegenden Erfindung liegt die Aufgabe zugrunde, einen Lenker für ein Flurförderzeug zur Verfügung zu stellen, das eine verbesserte Bedienung des Flurförderzeugs mit einer günstigen Ergonomie ermöglicht.

Diese Aufgabe wird erfindungsgemäß dadurch gelöst, dass der linke Griffabschnitt, der rechte Griffabschnitt und der Mittelgriffabschnitt von separaten Bauteilen gebildet sind, aus denen der Lenkkranz zusammengesetzt ist, wobei zwischen dem linken Griffabschnitt und dem rechten Griffabschnitt ein erster Befestigungsflansch, zwischen dem Mittelgriffabschnitt und dem linken Griffabschnitt ein zweiter Befestigungsflansch und zwischen dem Mittelgriffabschnitt und dem rechten Griffabschnitt ein dritter Befestigungsflansch ausgebildet ist. Erfindungsgemäß ist somit der Lenkkranz des Lenkrades als geschlossener Lenkkranz ausgebildet, der aus drei Bauteilen, nämlich dem linken Griffabschnitt, dem rechten Griffabschnitt und dem Mittelgriffabschnitt zusammengesetzt ist. Der linke Griffabschnitt, der rechte Griffabschnitt und der Mittelgriffabschnitt bilden somit jeweils ein Segment des Lenkkranzes, die mittels der Befestigungsflansche miteinander verbunden werden, um den geschlossenen Lenkkranz zu bilden. Ein wesentlicher Vorteil des erfindungsgemäßen Lenkrades besteht darin, dass der Mittelgriffschnitt mittels des zweiten Befestigungsflansches an dem linken Griffabschnitt und mittels des dritten Befestigungsflansches an dem rechten Griffabschnitt befestigt ist. Bei dem erfindungsgemäßen Lenkrad ist somit für den Mittelgriffabschnitt kein speichenförmiger Abschnitt erforderlich, um den zwischen dem linken und dem rechten Griffabschnitten angeordneten Mittelgriffabschnitt zu halten. Durch den Entfall eines speichenförmigen Abschnitts für den Mittelgriffabschnitt kann die Bedienperson in einer alternativen Griffposition mit der rechten oder der linken Hand den Mittelgriffabschnitt sicher umfassen und umgreifen, so dass das erfindungsgemäße Lenkrad in der alternativen Griffposition, in der die Bedienperson mit der linken Hand den Mittelgriffabschnitt von Außen umgreift und mit dem Daumen der linken Hand das rechte Bedienelement des Fahrantriebs betätigt oder mit der rechten Hand den Mittelgriffabschnitt von Außen umgreift und mit dem Daumen der rechten Hand das linke Bedienelement des Fahrantriebs betätigt, eine günstigen Ergonomie aufweist und eine verbesserte Bedienung des Flurförderzeugs ermöglicht.

Gemäß einer vorteilhaften Ausführungsform der Erfindung ist der erste Befestigungsflansch als Verbindungsflansch mit einer Schraubverbindung ausgebildet. Die Ausführung des ersten Befestigungsflansches als Verbindungsflansch mit einer Schraubverbindung, um den linken Griffabschnitt und den rechten Griffabschnitt miteinander zu verbinden, ergibt mit geringem Bauaufwand eine stabile Befestigung der beiden Griffabschnitte miteinander.

Gemäß einer vorteilhaften Ausführungsform der Erfindung sind der zweite Befestigungsflansch und der dritte Befestigungsflansch jeweils als Steckverbindung ausgebildet. Mit als Steckverbindungen ausgebildeten Befestigungsflanschen, mittels denen der Mittelgriffabschnitt an dem linken und rechten Griffabschnitt befestigt ist, kann der Mittelgriffabschnitt mit geringem Bauaufwand an den beiden Griffabschnitten befestigt werden, um den geschlossen Lenkkranz zu bilden und einen stabilen, geschlossenen Lenkkranz zu erzeugen. Die Ausbildung von Steckverbindungen zwischen dem Mittelgriffabschnitt und den beiden Griffabschnitten führt auch zu Vorteilen für die Anordnung des linken Bedienelements zur Steuerung des Fahrantriebs, das am Übergang des linken Griffabschnitts zum Mittelgriffabschnitt angeordnet ist, sowie des rechten Bedienelements zur Steuerung des Fahrantriebs, das am Übergang des rechten Griffabschnitts zum Mittelgriffabschnitt angeordnet ist.

Die Steckverbindung, mittels der der Mittelgriffabschnitt an dem linken bzw. rechten Griffabschnitt befestigt ist, weist gemäß einer vorteilhaften Ausführungsform der Erfindung jeweils einen Zapfen und eine Buchse auf, in die der Zapfen einsteckbar ist. Derartige Zapfenverbindungen sind mit geringem Herstellaufwand herstellbar und ermöglichen eine einfache Montage des Mittelabschnitts an dem linken und dem rechten Griffabschnitt.

Besondere Vorteile ergeben sich, wenn gemäß einer Weiterbildung der Erfindung zwischen dem Zapfen und der Buchse eine Presspassung ausgebildet ist und/oder eine formschlüssige Verbindung zur Axialsicherung ausgebildet ist. Mit einer Presspassung kann ein Vorspannung zwischen der Buchse und dem in die Buchse eingesteckten Zapfen erzielt werden, die ein Wackeln des Mittelgriffabschnitts verhindert und somit zu einer Stabilisierung der Steckverbindung und der Verbindung des Mittelgriffabschnitts mit dem linken und rechten Griffabschnitt führt. Mit einer zwischen dem Zapfen und der Buchse ausgebildeten formschlüssigen Verbindung kann auf einfache Weise eine Axialsicherung erzielt werden, die eine Herausausziehen des Zapfens aus der Buchse verhindert, beispielsweise durch entsprechende auf den Mittelgriffabschnitt ausgeübte Kräfte.

An den Enden des Mittelgriffabschnitts kann hierbei jeweils eine Buchse und an den Enden des linken und rechten Griffabschnitts jeweils ein Zapfen ausgebildet sein.

Gemäß einer bevorzugten Ausgestaltungsform der Erfindung ist der linke Griffabschnitt an einem Ende mit einer Buchse und der rechte Griffabschnitt an einem Ende mit einer Buchse und der Mittelgriffabschnitt an einem linken Ende mit einem linken Zapfen und an einem rechten Ende mit einem rechten Zapfen versehen.

Weitere Vorteile ergeben sich, wenn sich gemäß einer Ausgestaltungsform der Erfindung die beiden Griffabschnitte mit den beiden Enden, an denen der zweite Befestigungsflansch und der dritte Befestigungsflansch zur Befestigung des Mittelgriffabschnittes ausgebildet sind, aufeinander zu erstrecken. Hierdurch wird erzielt, dass die beiden Enden, an denen die Befestigungsflansche zur Befestigung des Mittelgriffabschnitts ausgebildet sind, einen bestimmten Winkel bilden, bevorzugt etwa einen rechten Winkel. Hierdurch wird erschwert, dass sich bei montiertem Lenkkranz an den Steckverbindungen der Zapfen aus der Buchse herausziehen lässt, beispielsweise durch entsprechende auf den Mittelgriffabschnitt ausgeübte Kräfte.

Gemäß einer vorteilhaften Weiterbildung der Erfindung sind an dem Mittelgriffabschnitt das linke Bedienelement und das rechte Bedienelement angeordnet. Die beiden Bedienelemente zur Steuerung des Fahrantriebs können mit geringem Herstellaufwand an dem Mittelgriffabschnitt montiert werden und anschließend der mit den beiden Bedienelementen versehene Mittelgriffabschnitt mittels der beiden Steckverbindungen mit den beiden Griffabschnitten verbunden werden. Diese ermöglicht eine einfache Montage der Bedienelemente an dem geschlossenen, von den beiden Griffabschnitten und dem Mittelgriffabschnitt gebildeten Lenkkranz.

Das Bedienelement ist bevorzugt jeweils als ringförmiges, drehbares Bedienelement ausgebildet. Derartige Bedienelemente können in ergonomischer Weise mit dem Daumen einer den linken oder rechten Griffabschnitt bzw. den Mittelgriffabschnitt umgreifenden Hand betätigt werden.

Gemäß einer bevorzugten Ausgestaltungsform der Erfindung ist der rechte Griffabschnitt oder der linke Griffabschnitt mit einer Lenkerkonsole versehen, die um die Drehachse drehbar angeordnet ist. Der erfindungsgemäße Lenker ist mittels der Lenkerkonsole um die Drehachse drehbar am Flurförderzeug gelagert. Der mit der Lenkerkonsole versehene rechte bzw. linke Griffabschnitt ist somit um die Drehachse drehbar gelagert und bildet einen Träger, an dem der linke bzw. rechte Griffabschnitt mittels des ersten Befestigungsflansches befestigt werden kann.

Hinsichtlich einer einfachen Herstellung des Lenkers ergeben sich Vorteile, wenn der linke Griffabschnitt und der rechte Griffabschnitt jeweils als Kunststoffbauteile ausgebildet sind, die jeweils mit einer metallischen Einlage versehen sind, wobei an den metallischen Einlagen der erste Befestigungsflansch ausgebildet ist. Mit den metallischen Einlagen, die bevorzugt aus Aluminium bestehen, können die als Kunststoffbauteile, beispielsweise aus einem faserverstärkten Kunststoff, ausgebildeten Griffabschnitte und somit der Lenkkranz im unteren Bereich auf einfache Weise verstärkt werden, um eine stabile Ausführung des ersten Befestigungsflansches zu erzielen.

Gemäß einer bevorzugten Ausführungsform der Erfindung weist der Verbindungsflansch zwei Flanschplatten auf, die mittels der Schraubverbindung miteinander verbindbar sind. Mit jeweils einer an dem linken und rechten Griffabschnitt ausgebildeten Flanschplatte kann in bauraumsparender Weise ein Befestigungsflansch geschaffen werden, der eine Verbindung der beiden Griffabschnitte ermöglicht. Mit einer Schraubverbindung, die eine oder mehrere Befestigungsschrauben umfassen kann, können die beiden Flanschplatten auf einfache Weise miteinander verbunden werden, um die beiden Griffabschnitte miteinander zu verbinden.

Mit besonderem Vorteil ist gemäß einer Ausführungsform der Erfindung der erste Befestigungsflansch, der zwischen dem rechten Griffabschnitt und dem linken Griffabschnitt ausgebildet ist, innerhalb der Lenkerkonsole angeordnet. Der Einbau des ersten Befestigungsflansches in die Lenkerkonsole führt zu Vorteilen hinsichtlich einer kompakten Bauweise des Lenkers.

Vorteilhafterweise ist die Lenkerkonsole mit einer Abdeckung versehen, unter der der erste Befestigungsflansch angeordnet ist. Der bevorzugt als Verbindungsflansch mit einer Schraubverbindung ausgebildete erste Befestigungsflansch ist somit nach dem Zusammensetzten und der Montage des Lenkkranzes und anschließendem Aufsetzen der Abdeckung von der Abdeckung abgedeckt, so dass Verbindungsflansch mit der Schraubverbindung nach Aufsetzen der Abdeckung auf die Lenkerkonsole von der Abdeckung verborgen ist.

Weitere Vorteile und Einzelheiten der Erfindung werden anhand der in den schematischen Figuren dargestellten Ausführungsbeispiele näher erläutert. Hierbei zeigt
- Figur 1: ein Flurförderzeug mit einem erfindungsgemäßem Lenkrad in einer perspektivischen Darstellung,
- Figur 2: das erfindungsgemäße Lenkrad in einer Ansicht auf die Vorderseite,
- Figur 3: das erfindungsgemäße Lenkrad in einer Seitenansicht,
- Figur 4: eine perspektivische Ansicht des erfindungsgemäßen Lenkrads,
- Figur 5: eine weitere perspektivische Ansicht des erfindungsgemäßen Lenkrads,
- Figur 6: einen Schnitt entlang der Linie A-A der Figur 3 einer ersten Ausführungsform eines erfindungsgemäßen Lenkrads,
- Figur 7: die metallischen Einlagen der Figur 6 in einer Einzeldarstellung
- Figur 8: einen Schnitt entlang der Linie A-A der Figur 3 einer zweiten Ausführungsform eines erfindungsgemäßen Lenkrads,
- Figur 9: der zweite Befestigungsflansch der Figur 8 in einer vergrößerten Darstellung und
- Figur 10: eine Darstellung gemäß der Figur 9 mit einer alternativen Ausführungsform des zweiten Befestigungsflansches.

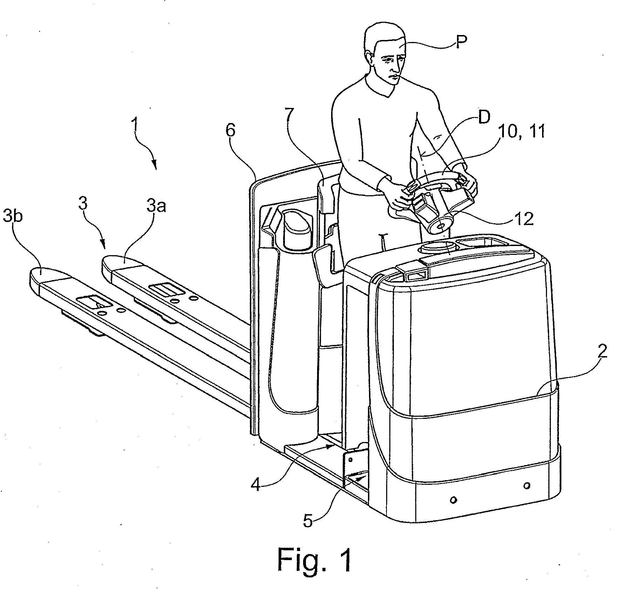

In der Figur 1 ist ein Flurförderzeug 1 mit einem erfindungsgemäßen als Lenkrad 11 ausgebildeten Lenker 10 dargestellt. Das im dargestellten Ausführungsbeispiel als Hubwagen oder Kommissionierer ausgebildete Flurförderzeug 1 weist einen Antriebsteil 2 und einen Lastteil 3 auf. Zwischen dem Antriebsteil 2 und dem Lastteil 3 ist ein Fahrerarbeitsplatz 4 für eine Bedienperson P angeordnet, der im dargestellten Ausführungsbeispiel als Fahrerstand für eine stehende Bedienperson P ausgebildet ist.

In dem Antriebsteil 2 ist ein lenkbares Antriebsrad angeordnet. Das Antriebsteil 2 ist weiterhin mit einem Batteriefach 5 für eine Traktionsbatterie versehen, die ein elektrisches Antriebssystem des Flurförderzeugs 1 mit elektrischer Energie versorgt. Das Lastteil 3 besteht im dargestellten Ausführungsbeispiel aus zwei Lastarmen 3a, 3b, die mittels eines Hubantriebs relativ zu dem Antriebsteil 2 anhebbar und absenkbar sind. Der Hubantrieb ermöglicht einen Initialhub der beiden Lastarme 3a, 3b. Im dargestellten Ausführungsbeispiel ist der Fahrerarbeitsplatz 4 in dem dem Lastteil 3 zugewandten Bereich mit einer vertikalen Brüstungswand 6 versehen. An der Brüstungswand 6 kann eine Anlehnhilfe 7 für die stehende Bedienperson P angeordnet sein.

In der Figur 1 befindet sich die Bedienperson P in einer Stellung für die Vorwärtsfahrt, in der die Bedienperson P in Richtung des Antriebsteil 2 blickt.

Zur Bedienung des Flurförderzeugs 1 ist ein erfindungsgemäßer Lenker 10 vorgesehen, der im dargestellten Ausführungsbeispiel oberhalb des Antriebsteils 2 angeordnet ist.

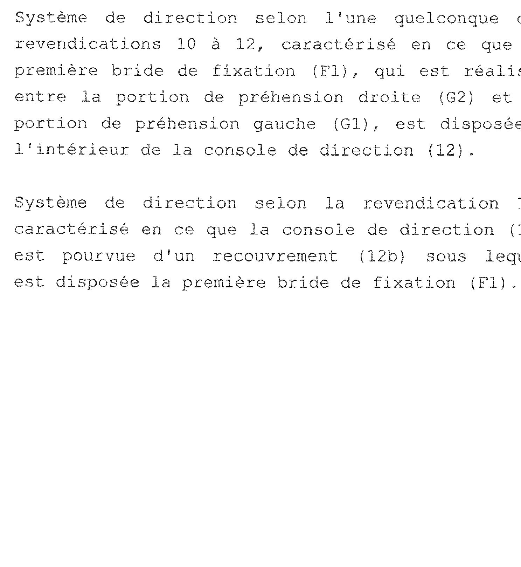

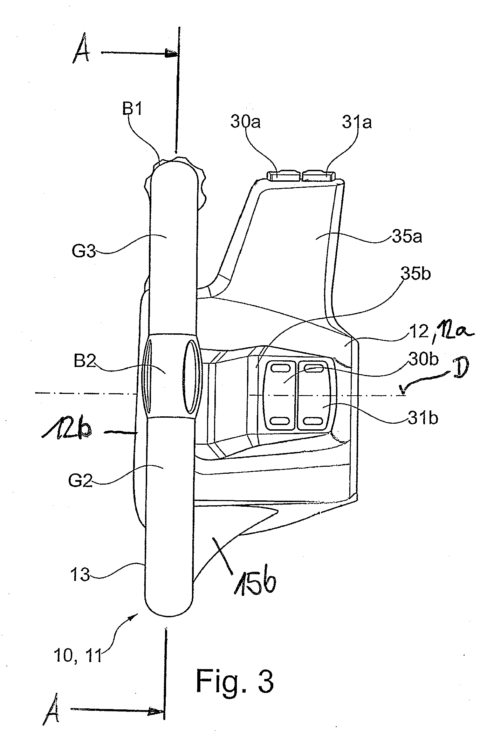

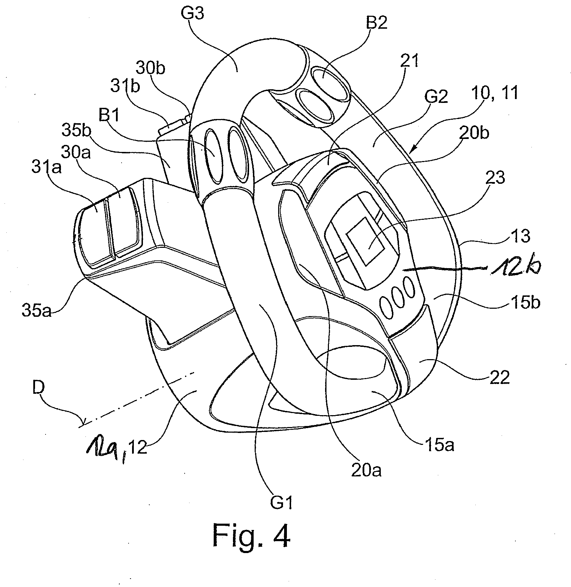

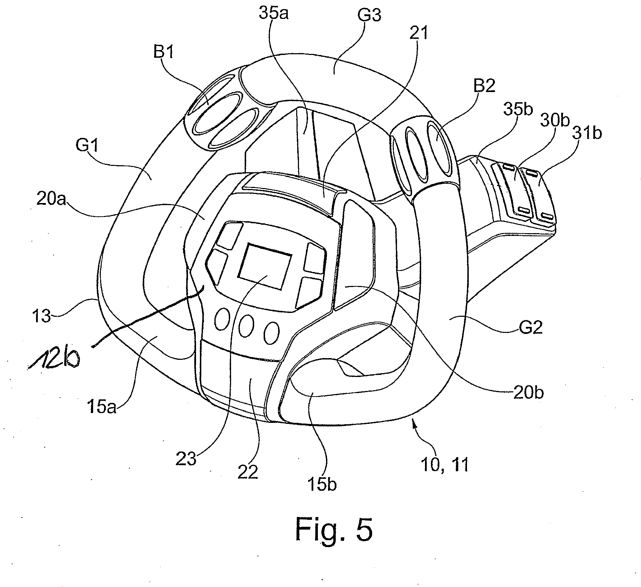

Der erfindungsgemäße Lenker 10 ist - wie in den Figuren 2 bis 5 näher ersichtlich ist - als Lenkrad 11 ausgebildet. Das Lenkrad 11 weist einen Lenkkranz 13 auf. Der Lenkkranz 13 ist als geschlossener Ring ausgebildet und weist - in der Vorderansicht der Figur 2 - eine im Wesentlichen trapezartige Gestalt mit abgerundeten Eckbereichen auf. Das Lenkrad 11 ist um eine Drehachse D drehbar an dem Flurförderzeug 1 angeordnet. Das Lenkrad 11 weist hierzu eine Lenkerkonsole 12 auf, mittels der das Lenkrad 11 um die Drehachse D drehbar an dem Flurförderzeugs 1 angeordnet ist.

Mit dem Lenkrad 11 kann ein Lenkantrieb, beispielsweise ein elektrischer Lenkantrieb, des Antriebsrades gesteuert werden, wobei durch eine Drehbewegung des Lenkrades 11 und der Lenkerkonsole 12 um die Drehachse D ein Lenkgeber betätigt wird, der den Drehwinkel des Lenkrads 11 um die Drehachse D erfasst. Anhand des erfassten Drehwinkel des Lenkrads 11 wird der Lenkantrieb des Antriebsrades angesteuert.

Der Lenkkranz 13 besteht aus einem linken Griffabschnitt G1, einem rechten Griffabschnitt G2 und einem oberen Mittelgriffabschnitt G3 auf, der zwischen den beiden Griffabschnitten G1, G2 angeordnet ist. Der geschlossene Lenkkranz 13 ist von den beiden Griffabschnitten G1, G2 und dem Mittelgriffabschnitt G3 gebildet. Der linke Griffabschnitt G1 und der rechte Griffabschnitt G2 sind jeweils L-förmig ausgebildet und weisen untere Ansätze 15a, 15b auf, die sich zu der drehbaren Lenkerkonsole 12 erstrecken. Die beiden Griffabschnitte G1, G2 sind aufeinander zugeneigt angeordnet und mittels des Mittelgriffabschnitts G3 verbunden. Zur Steuerung des Fahrantriebs des Antriebsrades ist ein linkes Bedienelement B1 am Übergang des linken Griffabschnitts G1 zum Mittelgriffabschnitt G3 und ein rechtes Bedienelement B2 zur Steuerung des Fahrantriebs am Übergang des rechten Griffabschnitts G2 zum Mittelgriffabschnitt G3 angeordnet. Der Mittelgriffabschnitt G3 stellt somit den oberen Bereich des Lenkkranzes 12 zwischen den beiden Bedienelementen B1, B2 dar. Das rechte Bedienelement B2 befindet sich - bezogen auf die in den Figuren 2 bis 5 dargestellte Geradeausfahrtstellung des Lenkrades 11 - in der 2-Uhr Stellung des Lenkrades 11. Das linke Bedienelement B1 befindet sich - bezogen auf die in den Figuren 2 bis 5 dargestellte Geradeausfahrtstellung des Lenkrades 11 - in der 10-Uhr Stellung des Lenkrades 11. Der Mittelgriffabschnitt G3 befindet sich - bezogen auf die in den Figuren 2 bis 5 dargestellte Geradeausfahrtstellung des Lenkrades 11 - im Bereich um die 12-Uhr Stellung des Lenkrades 11.

Der linke Griffabschnitt G1, der rechte Griffabschnitt G2 und der Mittelgriffabschnitt G3 sind jeweils im Querschnitt rund.

Die Bedienelemente B1, B2 zur Steuerung des Fahrantriebs sind jeweils an dem Lenkkranz 13 angeordnet und als ringförmige, drehbare Bedienelemente B1, B2 ausgebildet. Die Drehachse der Bedienelemente B1, B2 entspricht jeweils der entsprechenden Achse der Griffabschnitte G1, G2, so dass die Bedienelemente B1, B2 um den Lenkkranz 13 gedreht werden können. Die Bedienelemente B1, B2 können von der Bedienperson P, die den Lenkkranz 13 mit der linken Hand bzw. der rechten Hand oder mit beiden Händen umgreift mittels des Daumens der den Lenkkranz 13 umgreifenden Hand betätigt werden. Die Bedienelemente B1, B2 können hierzu mit entsprechenden Griffmulden versehen sein, in die der Daumen der entsprechenden Hand eingelegt werden kann.

In der dem Fahrerarbeitsplatz 4 zugewandten Vorderseite der Lenkerkonsole 12 können weitere Bedienelemente angeordnet sein, beispielsweise als Heben- und Senkenschalter ausgebildete Bedienelemente 20a, 20b zur Steuerung eines Hubantriebs des Flurförderzeugs 1. Im dargestellten Ausführungsbeispiel sind an der dem Fahrerarbeitsplatz 4 zugewandten Vorderseite der Lenkerkonsole 12 weiterhin ein Bedienelement 21 für ein Signalhorn und ein Bedienelement 22 eines Not-Aus-Schalters angeordnet. Darüber hinaus ist in dem dargestellten Ausführungsbeispiel in der dem Fahrerarbeitsplatz 4 zugewandten Vorderseite der Lenkerkonsole 12 ein Display 23 angeordnet.

An der drehbaren Lenkerkonsole 12 können an der dem Fahrerarbeitsplatz 4 abgewandten Rückseite des Lenkrades 11 mit Abstand von dem Lenkkranz 13 in Längsrichtung der Drehachse D der Lenkerkonsole 12 zumindest ein Zusatzbedienelement 30a, 30b, 31a, 31b angeordnet sein.

Im dargestellten Ausführungsbeispiel sind dem linken Bedienelement B1 und dem rechten Bedienelement B2 jeweils mindestens ein Zusatzbedienelement, im vorliegenden Ausführungsbeispiel jeweils zwei Zusatzbedienelemente 30a, 31 a, 30b, 31 b, zugeordnet. Die Zusatzbedienelemente 30a, 31 a sind hierbei mit Abstand hinter dem Bedienelement B1 und die Zusatzbedienelemente 30b, 31 b mit Abstand hinter dem Bedienelement B2 an der drehbaren Lenkerkonsole 12 angeordnet.

Für die Anordnung der Zusatzbedienelemente 30a, 31 a mit Abstand von dem Lenkkranz 13 und somit hinter dem Bedienelement B1 ist an der Lenkerkonsole 12 ein Träger 35a angeordnet, der sich an der Lenkerkonsole 12 speichenartig nach radial Außen in den Bereich des Lenkkranzes 13 erstreckt. Die Zusatzbedienelemente 30a, 31 a sind an der radial äußeren Stirnseite des Trägers 35a angeordnet. Entsprechend ist für die Anordnung der Zusatzbedienelemente 30b, 31 b mit Abstand von dem Lenkkranz 13 und somit hinter dem Bedienelement B2 an der Lenkerkonsole 12 ein Träger 35b angeordnet, der sich an der Lenkerkonsole 12 speichenartig nach radial Außen in den Bereich des Lenkkranzes 13 erstreckt. Die Zusatzbedienelemente 30b, 31 b sind an der radial äußeren Stirnseite des Trägers 35b angeordnet.

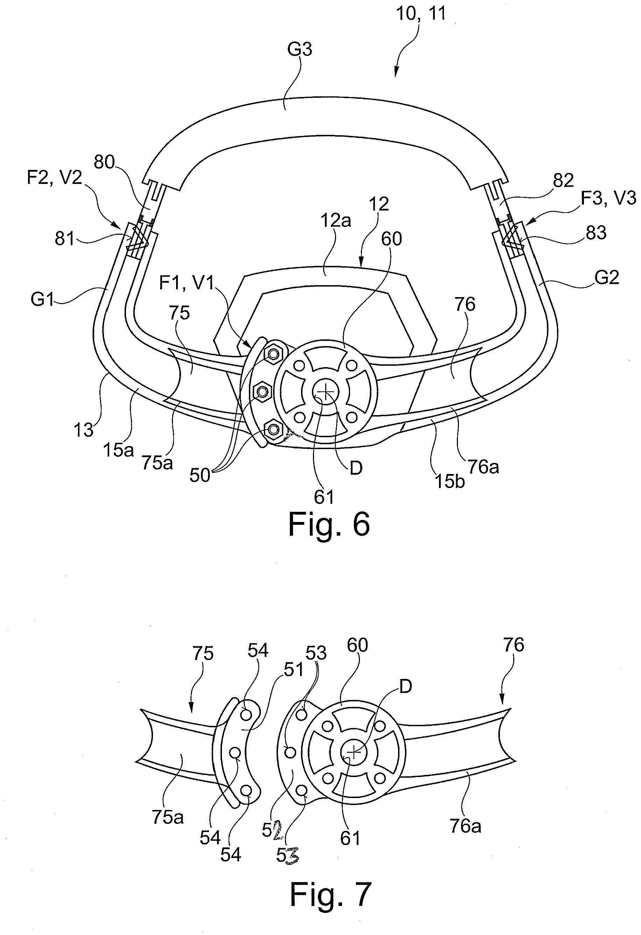

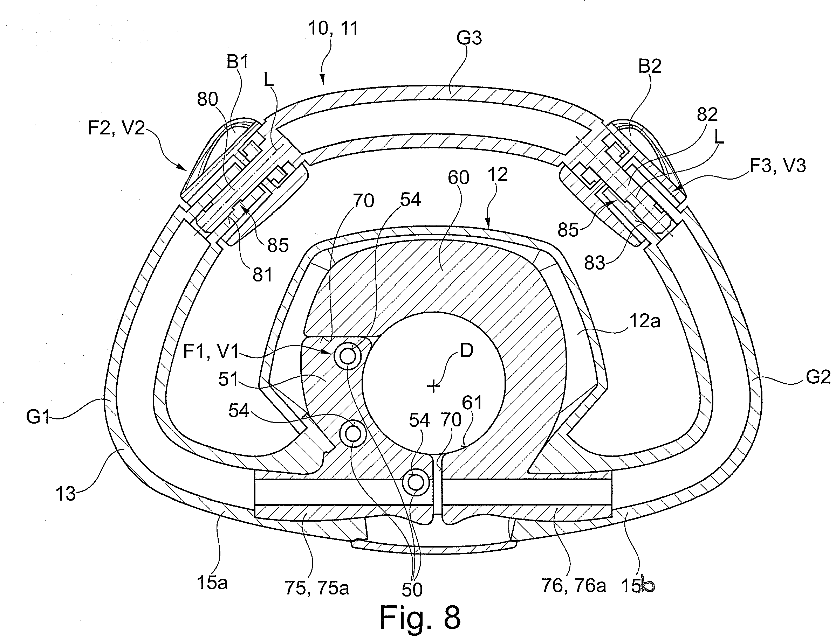

Bei dem erfindungsgemäßen Lenkrad 10 ist der Lenkkranz 13 - wie in Verbindung mit den Figuren 6 und 8 näher ersichtlich ist - aus drei separaten Bauteilen gebildet und zusammengesetzt. Diese drei separaten Bauteile sind von dem linken Griffabschnitt G1, dem rechten Griffabschnitt G2 und dem Mittelgriffabschnitt G3 gebildet. Durch Zusammensetzen und Verbinden dieser drei Bauteile wird somit der geschlossene Lenkkranz 13 des Lenkrades 10 gebildet.

Zwischen dem linken Griffabschnitt G1 und dem rechten Griffabschnitt G2 ist ein erster Befestigungsflansch F1 ausgebildet, der eine Befestigung der beiden Griffabschnitte G1, G2 miteinander ermöglicht.

In den dargestellten Ausführungsbeispielen ist der Befestigungsflansch F1 als Verbindungsflansch V1 mit einer Schraubverbindung 50 ausgebildet. Der Verbindungsflansch V1 weist eine erste Flanschplatte 51 auf, die an dem linken Griffabschnitt G1 ausgebildet ist, und eine zweite Flanschplatte 52 auf, die an dem rechten Griffabschnitt G2 ausgebildet ist. Die beiden Flanschplatten 51, 52 sind mittels der Schraubverbindung 50 miteinander verbindbar. Die Schraubverbindung 50 ist in den dargestellten Ausführungsbeispielen von mehreren Befestigungsschrauben gebildet. In den dargestellten Ausführungsbeispielen ist die an dem rechten Griffabschnitt G2 ausgebildete Flanschplatte 52 unterhalb der Flanschplatte 51 an dem linken Griffabschnitt G1 angeordnet, so dass die Flanschplatte 51 auf die Flanschplatte 52 aufgelegt und mittels der Schraubverbindung 50 mit der Flanschplatte 52 verbunden werden kann. In der unten liegenden Flanschplatte 52 sind hierzu bevorzugt Gewindebohrungen 53 ausgebildet, in die entsprechende Befestigungsschrauben der Schraubverbindung 50 eingeschraubt werden kann. Die oben liegende Flanschplatte 51 ist mit Durchgangsbohrungen 54 versehen, um die Befestigungsschrauben der Schraubverbindung 50 aufzunehmen.

Bei dem erfindungsgemäßen Lenkrad 11 ist der rechte Griffabschnitt G2 oder der linke Griffabschnitt G1 mit der Lenkerkonsole 12 versehen, die um die Drehachse D drehbar angeordnet ist. In den dargestellten Ausführungsbeispielen ist der rechte Griffabschnitt G2 mit der Lenkerkonsole 12 versehen.

Der rechte Griffabschnitt G2 ist hierzu mit einer kreisförmigen bzw. rohrförmigen Lagerkonsole 60 versehen, mittels der der rechte Griffabschnitt G2 und somit die Lenkerkonsole 12 durch eine nicht näher dargestellte Lagerung um die Drehachse D drehbar am Flurförderzeug 1 befestigt werden kann.

Der rechte Griffabschnitt G2 ist weiterhin mit einem Gehäuse 12a der Lenkerkonsole 12 versehen.

Die Lagerkonsole 60 ist konzentrisch zur Drehachse D angeordnet und mit einer zentrischen Aussparung 61 versehen, um eine Kabeldurchführung für die an dem Lenker 10 angeordneten Bedienelemente B1, B2, 20a, 20b, 21, 22 und das gegebenenfalls vorhandene Display 23 zu ermöglichen.

In dem Ausführungsbeispiel der Figur 6 ist die Flanschplatte 52 des Verbindungsflansches V1 an der Außenseite der Lagerkonsole 60 angeformt.

Bei dem Ausführungsbeispiel der Figur 8 bildet ein Kreissegmentsektor der Lagerkonsole 60 die Flanschplatte 52 des Verbindungsflansches V1. Um nach der Montage der Flanschplatte 51 auf der Flanschplatte 52 eine im wesentlichen bündige Oberseite zu erzielen, ist in der Figur 8 die Lagerkonsole 60 an der Oberseite mit einer an die Form der Flanschplatte 51 angepassten Aussparung 70 versehen, deren Tiefe im Wesentlichen der Dicke der Flanschplatte 51 entspricht.

Bei dem erfindungsgemäßen Lenkrad 11 sind die Griffabschnitte G1, G2 bevorzugt jeweils als Kunststoffbauteile ausgebildet. Bevorzugt sind die Kunststoffbauteile aus einem glasfaserverstärkten Kunststoff hergestellt, beispielsweise in einem Spritzgussverfahren. Um im Bereich des ersten Befestigungsflansches F1 eine ausreichende Stabilität zu erzeugen, sich die Griffabschnitte G1, G2 jeweils mit einer metallischen Einlage 75, 76 versehen sind, wobei an den metallischen Einlagen 75 ,76 der erste Befestigungsflansch F1 ausgebildet ist. Die metallischen Einlagen 75, 76 sind bevorzugt aus Aluminium hergestellt, beispielsweise in einem Gussverfahren.

Die metallische Einlage 75 des linken Griffabschnitts G1 weist hierbei - wie in den Figuren 6 bis 8 näher dargestellt ist - einen rohrförmigen Abschnitt 75a und die Flanschplatte 51 auf. Der mit dem Ansatz 15a versehene linke Griffabschnitt G1 ist als hohles Rohr ausgebildet, das im Bereich des Ansatzes 15a mit der metallischen Einlage 75 versehen und somit verbunden ist. Bevorzugt wird der Griffabschnitt G1 mit dem Ansatz 15a auf den rohrförmigen Abschnitt 75a der metallischen Einlage 75 aufgespritzt.

Die metallische Einlage 76 des rechten Griffabschnitts G2 weist hierbei - wie in den Figuren 6 bis 8 näher dargestellt ist - einen rohrförmigen Abschnitt 76a und die Lagerkonsole 60 mit der Flanschplatte 52 auf. Der mit dem Ansatz 15b versehene rechte Griffabschnitt G2 ist als hohles Rohr ausgebildet, das im Bereich des Ansatzes 15b mit der metallischen Einlage 76 versehen und somit verbunden ist. Bevorzugt wird der Griffabschnitt G2 mit dem Ansatz 15b auf den rohrförmigen Abschnitt 76a der metallischen Einlage 76 aufgespritzt.

In den dargestellten Ausführungsbeispielen ist der erste Befestigungsflansch F1, mittels dem der rechte Griffabschnitt G2 und der linke Griffabschnitt G1 verbindbar sind, innerhalb des Gehäuses 12a der Lenkerkonsole 12 angeordnet. Um eine Montage der Schraubverbindung 50 zu ermöglichen, ist die Lenkerkonsole 12 an der der Bedienperson zugewandten Oberseite mit einer entfernbaren Abdeckung 12b versehen. In den Figuren 6 und 8 ist hierbei die Abdeckung 12b entfernt. Bei montierter Abdeckung 12b ist somit der erste Befestigungsflansch F1 unterhalb der Abdeckung 12b angeordnet, so dass die Schraubverbindung 50 nicht von Außen sichtbar ist.

Die Abdeckung 12b ist hierbei mit den an der Vorderseite der Lenkerkonsole 12 angeordneten Bedienelementen 20a, 20b, 21, 22 sowie dem gegebenenfalls vorhandenen Display 23 versehen.

Bei dem erfindungsgemäßen Lenkrad 11 ist weiterhin zwischen dem Mittelgriffabschnitt G3 und dem linken Griffabschnitt G1 ein zweiter Befestigungsflansch F2 und zwischen dem Mittelgriffabschnitt G3 und dem rechten Griffabschnitt G2 ein dritter Befestigungsflansch F3 ausgebildet.

Der zweite Befestigungsflansch F2 ermöglicht somit eine Befestigung des Mittelgriffabschnitts G3 an dem linken Griffabschnitt G1. Entsprechend ermöglicht der dritte Befestigungsflansch F3 eine Befestigung des Mittelgriffabschnitts G3 an dem rechten Griffabschnitt G2.

In den dargestellten Ausführungsbeispielen ist der zweite und dritte Befestigungsflansch F2, F3 jeweils als Steckverbindung V2, V3 ausgebildet. Die Steckverbindungen V2, mittels der der Mittelgriffabschnitt G3 an dem linken Griffabschnitt G1 befestigt ist, weist einen Zapfen 80 und eine Buchse 81 auf, in die der Zapfen 80 einsteckbar ist. Entsprechend weist die Steckverbindungen V3, mittels der der Mittelgriffabschnitt G3 an dem rechten Griffabschnitt G2 befestigt ist, einen Zapfen 82 und eine Buchse 83 auf, in die der Zapfen 82 einsteckbar ist.

Durch geeignete Durchmesserwahl kann zwischen dem Zapfen 80, 82 und der zugeordneten Buchse 81, 83 eine Presspassung ausgebildet sein, um die Steckverbindung V2, V3 zu stabilisieren und ein Wackeln des eingesteckten Mittelgriffabschnitts G3 zu vermeiden.

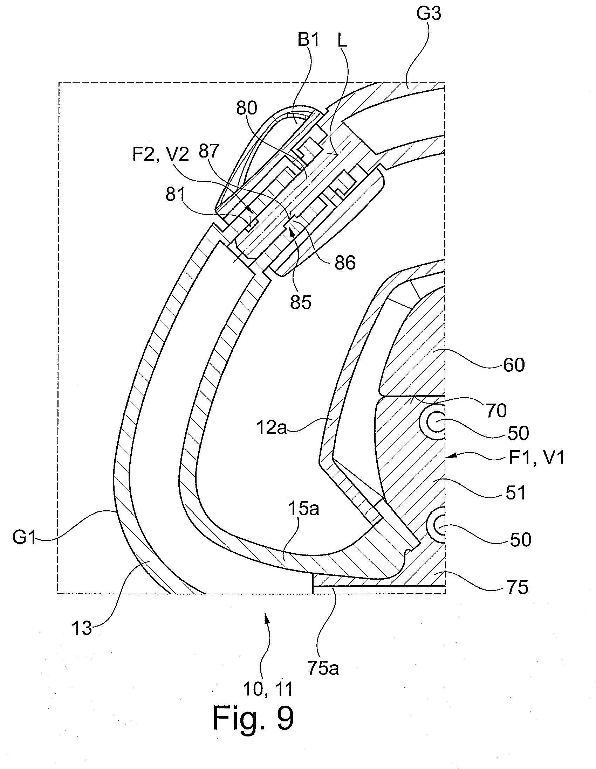

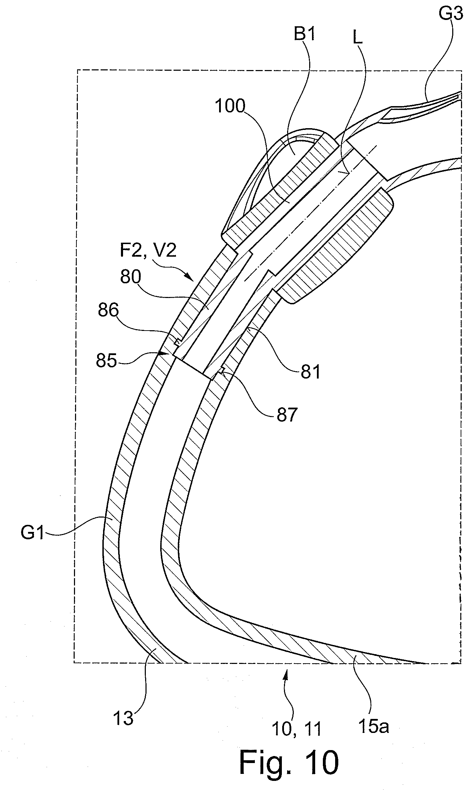

Alternativ oder zusätzlich kann eine formschlüssige Verbindung 85 zur Axialsicherung des in die Buchse 81, 83 eingesteckten Zapfens 80, 82 vorgesehen sein. Die formschlüssige Verbindung 85 ist in den Ausführungsbeispiel der Figuren 8 - 10 von einem Rastvorsprung 86 gebildet, der beim Einschieben des Bolzens 80, 82 in die Buchse 81, 83 selbststätig und automatisch in eine Rastausnehmung 87 einrastet. In den Figuren 8 und 9 ist der Rastvorsprung 86 an der Buchse 81, 83 ausgebildet und die Rastausnehmung 87 an dem Zapfen 80, 82. In der Figur 10 ist eine Umkehr dargestellt, bei der der Rastvorsprung 86 an dem Zapfen 80, 82 ausgebildet ist und die Rastausnehmung 87 an der Buchse 81, 83.

Bei dem erfindungsgemäßen Lenkrad 11 ist der Mittelgriffabschnitt G3 bevorzugt als Kunststoffbauteile ausgebildet. Bevorzugt ist das Kunststoffbauteil aus einem glasfaserverstärkten Kunststoff hergestellt, beispielsweise in einem Spritzgussverfahren.

Der Mittelgriffabschnitt G3 ist hierbei als hohles Rohr ausgebildet. An den beiden Enden ist der Mittelgriffabschnitt G3 mit den beiden Zapfen 80, 82 versehen.

Der linke Griffabschnitt G1 ist an dem dem Mittelgriffabschnitt G3 zugewandten Ende mit der Buchse 81 versehen. Entsprechend ist der rechte Griffabschnitt G2 an dem dem Mittelgriffabschnitt G3 zugewandten Ende mit der Buchse 83 versehen.

In dem Ausführungsbeispiel der Figuren 8 und 9 sind die Zapfen 80, 82 als Vollquerschnitte ausgebildet, die an den Enden des als hohles Rohr ausgebildeten Mittelgriffabschnitts G3 angeformt sind. In den Figuren 8 und 9 sind die Buchsen 81, 83 als Verlängerungen an das entsprechende Ende des hohlrohrförmigen Griffabschnitts G1 bzw. G2 angeformt.

In dem Ausführungsbeispiel der Figur 10 sind die Zapfen 80, 82 als Hohlrohrquerschnitte ausgebildet, die an den Enden des als hohles Rohr ausgebildeten Mittelgriffabschnitts G3 ausgebildet sind. In der Figur 10 sind die Endabschnitte des als hohles Rohr ausgebildeten Griffabschnitts G1 bzw. G2 jeweils als Buchse 81, 83 ausgeführt.

Bei dem erfindungsgemäßen Lenkrad 11 laufen die beiden Griffabschnitte G1, G2 mit den beiden Enden, an denen der zweite Befestigungsflansch F2 und der dritte Befestigungsflansch F3 zur Befestigung des Mittelgriffabschnittes G3 ausgebildet sind, aufeinander zu. Die beiden Enden der Griffabschnitte G2, G3, an denen der zweite Befestigungsflansch F2 und der dritte Befestigungsflansch F3 ausgebildet sind, bilden hierbei einen Winkel, der in etwa einem rechten Winkel entspricht oder ein wenig größer oder kleiner sein kann.

Bei dem erfindungsgemäßen Lenkrad 11 sind an dem Mittelgriffabschnitt G3 das linke Bedienelement B1 und das rechte Bedienelement B2 angeordnet, die jeweils als ringförmige, drehbare Bedienelemente ausgebildet sind.

In dem Ausführungsbeispiel der Figuren 8 und 9 sind die Bedienelemente B1, B2 auf dem entsprechenden Zapfen 80, 82 drehbar angeordnet. Die Drehachse L der Bedienelemente B1, B2 entspricht der Längsachse des Zapfens 80, 82. Die Buchse 81, 83 befindet sich jeweils innerhalb der Bedienelemente B1, B2, so dass das linke Bedienelement B1 um den Befestigungsflansch F2 und das rechte Bedienelement B2 um den Befestigungsflansch F3 angeordnet ist. Ein Verbindungskabel für einen Sensor der Bedienelemente B1, B2 kann hierbei über einen nicht näher dargestellten Kabelkanal an dem Zapfen 80, 82 oder der Buchse 81, 83 sowie die hohlrohrfömigen Griffabschnitte G1, G2 und die hohlrohrförmigen Abschnitte 75a, 76a der metallischen Einlagen 75, 76 zu der zentrischen Aussparung 61 geführt werden.

In dem Ausführungsbeispiel der Figur 10 sind die Bedienelemente B1, B2 auf dem rohrförmigen Mittelgriffabschnitt G3 - in Umfangsrichtung des Lenkkranzes 13 gesehen - oberhalb der Zapfen 80, 82 drehbar angeordnet, so dass das linke Bedienelement B1 neben dem Befestigungsflansch F2 und das rechte Bedienelement B2 neben dem Befestigungsflansch F3 angeordnet ist. Die Drehachse L der Bedienelemente B1, B2 entspricht der Längsachse des Rohrabschnittes 100 des Mittelgriffabschnitts G3, auf dem die Bedienelemente B1, B2 drehbar angeordnet sind. Ein Verbindungskabel für einen Sensor der Bedienelemente B1, B2 kann hierbei über die als Hohlrohrquerschnitte ausgebildete Zapfen 80, 82 oder der Buchse 81, 83 sowie die hohlrohrfömigen Griffabschnitte G1, G2 sowie die hohlrohrförmigen Abschnitte 75a, 76a der metallischen Einlagen 75, 76 zu der zentrischen Aussparung 61 geführt werden.

Um das erfindungsgemäße Lenkrad 11 mit dem geschlossenen Lenkkranz 13 zu montieren, werden in einem ersten Schritt an dem Mittelgriffabschnitt G3 die Bedienelemente B1, B2 montiert. Anschließend wird in einem zweiten Schritt der mit den Bedienelementen B1, B2 versehene Mittelgriffabschnitt G3 mittels der Befestigungsflansche F2 und F3 mit den beiden Griffabschnitten G1, G2 verbunden, die noch nicht miteinander verbunden sind. Durch die Ausbildung der Befestigungsflansche F2, F3 als Steckverbindungen V2, V3 kann dies auf einfache Weise werkzeuglos durch Einstecken der Zapfen 80, 82 in die Buchsen 81, 83 erfolgen. Anschließend wird in einem dritten Schritt der linke und entfernbare Griffabschnitt G1 über den Befestigungsflansch F1 an dem rechten Griffabschnitt G2 befestigt, indem die Flanschplatten 51, 52 übereinander gelegt werden und die Schraubverbindung 50 angezogen wird. Anschließend kann die Abdeckung 12b an der Lenkerkonsole 12 befestigt werden, um den Befestigungsflansch F1 mit der Verschraubung 50 abzudecken.

Im montierten Zustand weist das erfindungsgemäße Lenkrad 11, das an dem Lenkkranz 13 mit den beiden Bedienelementen B1, B2 zur Steuerung des Fahrantriebs versehen ist, einen geschlossenen Lenkkranz 13 auf. Für die Halterung des Mittelgriffabschnitts G3 ist durch die erfindungsgemäße Befestigung des Mittelgriffabschnitts G3 an den beiden Griffabschnitten G1, G2 kein speichenförmiger Abschnitt zu der Lenkerkonsole 12 erforderlich. Eine Bedienperson P kann daher in einer alternativen Griffposition mit der rechten oder der linken Hand den rohrförmigen Mittelgriffabschnitt G3 sicher umfassen und umgreifen, so dass das erfindungsgemäße Lenkrad 11 in der alternativen Griffposition, in der die Bedienperson mit der linken Hand den Mittelgriffabschnitt G3 von Außen umgreift und mit dem Daumen der linken Hand das rechte Bedienelement B2 des Fahrantriebs betätigt oder mit der rechten Hand den Mittelgriffabschnitt G3 von Außen umgreift und mit dem Daumen der rechten Hand das linke Bedienelement B1 des Fahrantriebs betätigt, eine günstigen Ergonomie aufweist und eine verbesserte Bedienung des Flurförderzeugs 1 ermöglicht.

## Patentansprüche

1. Lenker (10) eines einen Fahrerarbeitsplatz (4), insbesondere Fahrerstand, aufweisenden Flurförderzeugs (1), wobei der Lenker (10) als Lenkrad (11) ausgebildet ist, das einen Lenkkranz (13) aufweist, und um eine Drehachse (D) drehbar angeordnet ist, wobei der Lenkkranz (13) einen linken Griffabschnitt (G1), einen rechten Griffabschnitt (G2) und einen zwischen den beiden Griffabschnitten (G1; G2) angeordneten Mittelgriffabschnitt (G3) aufweist, wobei ein linkes Bedienelement (B1) zur Steuerung des Fahrantriebs am Übergang des linken Griffabschnitts (G1) zum Mittelgriffabschnitt (G3) und ein rechtes Bedienelement (B2) zur Steuerung des Fahrantriebs am Übergang des rechten Griffabschnitts (G2) zum Mittelgriffabschnitt (G3) angeordnet ist, wobei der linke Griffabschnitt (G1), der rechte Griffabschnitt (G2) und der Mittelgriffabschnitt (G3) von separaten Bauteilen gebildet sind, aus denen der Lenkkranz (13) zusammengesetzt ist, **dadurch gekennzeichnet**, das zwischen dem linken Griffabschnitt (G1) und dem rechten Griffabschnitt (G2) ein erster Befestigungsflansch (F1), zwischen dem Mittelgriffabschnitt (G3) und dem linken Griffabschnitt (G1) ein zweiter Befestigungsflansch (F2) und zwischen dem Mittelgriffabschnitt (G3) und dem rechten Griffabschnitt (G2) ein dritter Befestigungsflansch (F3) ausgebildet ist.

2. Lenker nach Anspruch 1, **dadurch gekennzeichnet, dass** der erste Befestigungsflansch (F1) als Verbindungsflansch (V1) mit einer Schraubverbindung (50) ausgebildet ist.

3. Lenker nach Anspruch 1 oder 2, **dadurch gekennzeichnet, dass** der zweite Befestigungsflansch (F2) und der dritte Befestigungsflansch (F3) jeweils als Steckverbindung (V2, V3) ausgebildet sind.

4. Lenker nach Anspruch 3, **dadurch gekennzeichnet, dass** die Steckverbindung (V2; V3), mittels der der Mittelgriffabschnitt (G3) an dem jeweiligen Griffabschnitt (G1; G2) befestigt ist, jeweils einen Zapfen (80; 82) und eine Buchse (81; 83) aufweist, in die der Zapfen (80; 82) einsteckbar ist.

5. Lenker nach Anspruch 4, **dadurch gekennzeichnet, dass** zwischen dem Zapfen (80; 82) und der Buchse (81; 83) eine Presspassung ausgebildet ist und/oder eine formschlüssige Verbindung (85) zur Axialsicherung ausgebildet ist.

6. Lenker nach Anspruch 4 oder 5, **dadurch gekennzeichnet, dass** der linke Griffabschnitt (G1) an einem Ende mit einer Buchse (81) und der rechte Griffabschnitt (G2) an einem Ende mit einer Buchse (83) und der Mittelgriffabschnitt (G3) an einem linken Ende mit einem linken Zapfen (80) und an einem rechten Ende mit einem rechten Zapfen (82) versehen ist.

7. Lenker nach einem der Ansprüche 1 bis 6, **dadurch gekennzeichnet, dass** sich die beiden Griffabschnitte (G1, G2) mit den beiden Enden, an denen der zweite Befestigungsflansch (F2) und der dritte Befestigungsflansch (F3) zur Befestigung des Mittelgriffabschnittes (G3) ausgebildet sind, aufeinander zu erstrecken.

8. Lenker nach einem der Ansprüche 1 bis 7, **dadurch gekennzeichnet, dass** an dem Mittelgriffabschnitt (G3) das linke Bedienelement (B1) und das rechte Bedienelement (B2) angeordnet ist.

9. Lenker nach einem der Ansprüche 1 bis 8, **dadurch gekennzeichnet, dass** das Bedienelement (B1; B2) jeweils als ringförmiges, drehbares Bedienelement (B1; B2) ausgebildet ist.

10. Lenker nach einem der Ansprüche 1 bis 9, **dadurch gekennzeichnet, dass** der rechte Griffabschnitt (G2) oder der linke Griffabschnitt (G1) mit einer Lenkerkonsole (12) versehen ist, die um die Drehachse (D) drehbar angeordnet ist.

11. Lenker nach einem der Ansprüche 1 bis 10, **dadurch gekennzeichnet, dass** der linke Griffabschnitt (G1) und der rechte Griffabschnitt (G2) jeweils als Kunststoffbauteile ausgebildet sind, die jeweils mit einer metallischen Einlage (75, 76) versehen sind, wobei an den metallischen Einlagen (75, 76) der erste Befestigungsflansch (F1) ausgebildet ist.

12. Lenker nach einem der Ansprüche 2 bis 11, **dadurch gekennzeichnet, dass** der Verbindungsflansch (V1) zwei Flanschplatten (51, 52) aufweist, die mittels der Schraubverbindung (50) miteinander verbindbar sind.

13. Lenker nach einem der Ansprüche 10 bis 12, **dadurch gekennzeichnet, dass** der erste Befestigungsflansch (F1), der zwischen dem rechten Griffabschnitt (G2) und dem linken Griffabschnitt (G1) ausgebildet ist, innerhalb der Lenkerkonsole (12) angeordnet ist.

14. Lenker nach Anspruch 13, **dadurch gekennzeichnet, dass** die Lenkerkonsole (12) mit einer Abdeckung (12b) versehen ist, unter der der erste Befestigungsflansch (F1) angeordnet ist.

## Claims

1. Steering decive (10) of an industrial truck (1) having a driver's workplace (4), in particular driver's platform, wherein the steering decive (10) is embodied as a steering wheel (11) which has a steering rim (13) and is arranged rotatably about an axis of rotation (D), wherein the steering rim (13) has a left gripping section (G1), a right gripping section (GR) and a central gripping section (G3) arranged between the two gripping sections (G1; G2), wherein a left operator control element (B1) for controlling the traction drive is arranged at the transition of the left gripping section (G1) to the central gripping section (G3) and a right operator control element (B2) for controlling the traction drive is arranged at the transition of the right gripping section (G2) to the central gripping section (G3), wherein the left gripping section (G1), the right gripping section (G2) and the central gripping section (G3) are formed by separate components from which the steering rim (13) is composed, **characterized in that** a first fastening flange (F1) is formed between the left gripping section (G1) and the right gripping section (G2), a second fastening flange (F2) is formed between the central gripping section (G3) and the left gripping section (G2), and a third fastening flange (F3) is formed between the central gripping section (G3) and the right gripping section (G3).

2. Steering decive according to Claim 1, **characterized in that** the first fastening flange (F1) is embodied as a connecting flange (V1) with a screw connection (50).

3. Steering decive according to Claim 1 or 2, **characterized in that** the second fastening flange (F2) and the third fastening flange (F3) are in each case embodied as a plug-in connection (V2, V3) .

4. Steering decive according to Claim 3, **characterized in that** the plug-in connection (V2; V3), by means of which the central gripping section (G3) is fastened to the respective gripping section (G1; G2), in each case has a pin (80; 82) and a socket (81; 83) into which the pin (80; 82) can be plugged.

5. Steering decive according to Claim 4, **characterized in that** an interference fit is formed between the pin (80; 82) and the socket (81; 83), and/or an interlocking connection (85) is formed therebetween for axial securing purposes.

6. Steering decive according to Claim 4 or 5, **characterized in that** the left gripping section (G1) is provided with a socket (81) at one end and the right gripping section (G2) is provided with a socket (83) at one end, and the central gripping section (G3) is provided with a left pin (80) at a left end and with a right pin (82) at a right end.

7. Steering decive according to one of Claims 1 to 6, **characterized in that** the two gripping sections (G1, G2) extend towards each other at the two ends at which the second fastening flange (F2) and the third fastening flange (F3) for the fastening of the central gripping section (G3) are formed.

8. Steering decive according to one of Claims 1 to 7, **characterized in that** the left operator control element (B1) and the right operator control element (B2) are arranged on the central gripping section (G3).

9. Steering decive according to one of Claims 1 to 8, **characterized in that** the operator control element (B1; B2) is in each case embodied as an annular, rotatable operator control element (B1; B2).

10. Steering decive according to one of Claims 1 to 9, **characterized in that** the right gripping section (G2) or the left gripping section (G1) is provided with a steering decive console (12) which is arranged rotatably about the axis of rotation (D).

11. Steering decive according to one of Claims 1 to 10, **characterized in that** the left gripping section (G1) and the right gripping section (G2) are in each case embodied as plastics components which are in each case provided with a metallic insert (75, 76), wherein the first fastening flange (F1) is formed on the metallic inserts (75, 76) .

12. Steering decive according to one of Claims 2 to 11, **characterized in that** the connecting flange (V1) has two flange plates (51, 52) which are connectable to each other by means of the screw connection (50).

13. Steering decive according to one of Claims 10 to 12, **characterized in that** the first fastening flange (F1) which is formed between the right gripping section (G2) and the left gripping section (G1) is arranged within the steering decive console (12).

14. Steering decive according to Claim 13, **characterized in that** the steering decive console (12) is provided with a covering (12b) under which the first fastening flange (F1) is arranged.

## Revendications

1. Système de direction (10) pour un chariot de manutention (1) présentant un poste de travail de conducteur (4), en particulier un poste de station debout, dans lequel le système de direction (10) est réalisé sous forme de volant de direction (11) qui présente une couronne de volant (13) et qui est disposé de manière à pouvoir tourner autour d'un axe de rotation (D), la couronne de volant (13) présentant une portion de préhension gauche (G1), une portion de préhension droite (G2) et une portion de préhension centrale (G3) disposée entre les deux portions de préhension (G1 ; G2), un élément de commande gauche (B1) pour commander l'entraînement de conduite au niveau de la transition entre la portion de préhension gauche (G1) et la portion de préhension centrale (G3) et un élément de commande droit (B2) pour la commande de l'entraînement de conduite au niveau de la transition entre la portion de préhension droite (G2) et la portion de préhension centrale (G3), la portion de préhension gauche (G1), la portion de préhension droite (G2) et la portion de préhension centrale (G3) étant formées par des composants séparés qui constituent la couronne de volant (13), **caractérisé en ce qu'**entre la portion de préhension gauche (G1) et la portion de préhension droite (G2) est réalisée une première bride de fixation (F1), entre la portion de préhension centrale (G3) et la portion de préhension gauche (G1) est réalisée une deuxième bride de fixation (F2) et entre la portion de préhension centrale (G3) et la portion de préhension droite (G2) est réalisée une troisième bride de fixation (F3).

2. Système de direction selon la revendication 1, **caractérisé en ce que** la première bride de fixation (F1) est réalisée sous forme de bride de connexion (V1) avec une connexion par vissage (50).

3. Système de direction selon la revendication 1 ou 2, **caractérisé en ce que** la deuxième bride de fixation (F2) et la troisième bride de fixation (F3) sont à chaque fois réalisées sous forme de connexions enfichables (V2, V3).

4. Système de direction selon la revendication 3, **caractérisé en ce que** la connexion enfichable (V2 ; V3) au moyen de laquelle la portion de préhension centrale (G3) est fixée à la portion de préhension respective (G1 ; G2), présente à chaque fois un tourillon (80 ; 82) et une douille (81 ; 83) dans laquelle le tourillon (80 ; 82) peut être enfiché.

5. Système de direction selon la revendication 4, **caractérisé en ce qu'**entre le tourillon (80 ; 82) et la douille (81 ; 83) est réalisé un ajustement serré et/ou est réalisée une connexion par engagement par correspondance de formes (85) en vue de la fixation axiale.

6. Système de direction selon la revendication 4 ou 5, **caractérisé en ce que** la portion de préhension gauche (G1) est pourvue à une extrémité d'une douille (81) et la portion de préhension droite (G2) est pourvue à une extrémité d'une douille (83) et la portion de préhension centrale (G3) est pourvue au niveau d'une extrémité gauche d'un tourillon gauche (80) et au niveau d'une extrémité droite d'un tourillon droit (82).

7. Système de direction selon l'une quelconque des revendications 1 à 6, **caractérisé en ce que** les deux portions de préhension (G1, G2) avec les deux extrémités au niveau desquelles la deuxième bride de fixation (F2) et la troisième bride de fixation (F3) sont réalisées pour la fixation de la portion de préhension centrale (G3), s'étendent l'une vers l'autre.

8. Système de direction selon l'une quelconque des revendications 1 à 7, **caractérisé en ce que** l'élément de commande gauche (B1) et l'élément de commande droit (B2) sont disposés au niveau de la portion de préhension centrale (G3).

9. Système de direction selon l'une quelconque des revendications 1 à 8, **caractérisé en ce que** l'élément de commande (B1 ; B2) est à chaque fois réalisé sous forme d'élément de commande rotatif annulaire (B1 ; B2).

10. Système de direction selon l'une quelconque des revendications 1 à 9, **caractérisé en ce que** la portion de préhension droite (G2) ou la portion de préhension gauche (G1) est pourvue d'une console de direction (12) qui est disposée de manière à pouvoir tourner autour de l'axe de rotation (D).

11. Système de direction selon l'une quelconque des revendications 1 à 10, **caractérisé en ce que** la portion de préhension gauche (G1) et la portion de préhension droite (G2) sont chacune réalisées sous forme de composant en plastique qui sont chacun pourvus d'un insert métallique (75, 76), la première bride de fixation (F1) étant réalisée au niveau des inserts métalliques (75, 76).

12. Système de direction selon l'une quelconque des revendications 2 à 11, **caractérisé en ce que** la bride de connexion (V1) présente deux plaques à bride (51, 52) qui peuvent être connectées l'une à l'autre au moyen de la connexion par vissage (50).

13. Système de direction selon l'une quelconque des revendications 10 à 12, **caractérisé en ce que** la première bride de fixation (F1), qui est réalisée entre la portion de préhension droite (G2) et la portion de préhension gauche (G1), est disposée à l'intérieur de la console de direction (12).

14. Système de direction selon la revendication 13, **caractérisé en ce que** la console de direction (12) est pourvue d'un recouvrement (12b) sous lequel est disposée la première bride de fixation (F1).
